# EUROPEAN PATENT APPLICATION

(11) **EP 3 034 312 A1**
(43) Date of publication of application: **22.06.2016**
(21) Application number: 14198768.5
(22) Date of filing: 18.12.2014
(51) Int. Cl.: B41M 7/00, C09D 11/101, C09D 11/38

(54) **Radiation curable compositions for printing on glass**

(71) Applicant: AGFA GRAPHICS NV, 2640 Mortsel (BE)
(72) Inventor: Loccufier, Johan, 2640 Mortsel (BE)
(74) Representative: Strijckers, Hans Louis P.

(57) **Abstract**

A radiation curable composition containing a) a free radical polymerizable composition containing at least 95 wt% relative to the free radical polymerizable composition of one or more monofunctional (meth)acrylates, wherein at least 80 wt% of the one or more monofunctional (meth)acrylates consist of monofunctional (meth)acrylates including at least one five or six membered acetal ring in their structure; and b) at least one acetal containing polymer having a plurality of repeating units according to Formula (I): 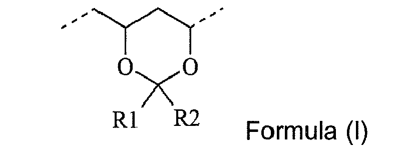 wherein R1 and R2 are independently selected from the group consisting of a hydrogen, an alkyl group, an alkenyl group, an alkynyl group, an aralkyl group, an alkaryl group, an aryl group and a heteoraryl group.

## Description

### Technical Field

The present invention relates to radiation curable compositions for printing on glass surfaces. The invention is especially suitable for UV curable inkjet inks and inkjet printing methods for producing images on glass surfaces.

### Background Art

Analogue printing systems, such as offset and flexography, are being increasingly replaced by inkjet printing systems for industrial applications, due to their flexibility in use, such as the capability of variable data printing, and due to their enhanced reliability allowing their incorporation into production lines. UV curable inkjet inks are particularly preferred because high quality colour images can be printed on non-absorbing ink-receivers, such as plastic materials.

However some non-absorbing ink-receivers, like glass, pose real problems for adhesion of UV curable inkjet ink to the ink-receiving surface.

One approach to improve adhesion to a glass surface is to include in the inkjet ink finely ground glass particles, called frit, and use high firing temperatures to fuse the ink with the glass substrate. For example, WO 2007/036942 (DIP TECH LTD) discloses UV curable ink-jet inks for printing on glass and ceramic substrates comprising: (a) a liquid vehicle; (b) sub-micron particles of binding composition having a melting point below 600 °C; and (c) sub-micron particles causing an etch-like effect, said sub- micron particles are selected from metal oxide particles, high melting point frit particles, and a combination thereof, said sub-micron particles causing an etch-like effect have a melting point of at least 50 °C above the melting point of said sub-micron particles of binding composition. The high firing temperatures result in high energy consumption for printing only a limited range of suitable colorants.

Another approach is to apply an adhesive layer by coating a usually solvent based adhesive liquid or by applying the adhesive layer as a polymeric sheet on the glass surface. The adhesive layer contains a polymer having a high affinity for glass, such as e.g. polyvinylbutyral. Such solvent based compositions have been made suitable for inkjet printing. For example, EP 2035511 A discloses ink jet inks comprising two or more organic solvents at least one of which is an alcohol, three or more binder resins comprising nitrocellulose, a thermoplastic polyurethane, and polyvinylbutyral, two or more adhesion promoters, and a soluble colorant. An example of using an inkjet printed polyvinylbutyral sheet to make decorative glass laminates is given by WO 2005/014280 (DUPONT). In the latter, again high temperatures are required in an autoclave to bind the polymeric sheet to the glass.

Yet another approach is to use specific types of monomers in the inkjet ink. For example, EP 1238024 A (3M) discloses a cationically curable inkjet ink comprising a homogeneous mixture of a compound having 2 reactive silyl groups and a compound having at least 3 reactive silyl groups ; an acid generating catalyst; and a colour pigment. It was found in industrial inkjet printing systems that cationically curable inkjet inks posed problems of jetting reliability due to UV stray light. The UV-curing of the ink is caused by reflections of UV light, including UV light hitting the nozzle plate of an inkjet print head and resulting into failing nozzles due to clogging by cured ink in the nozzle. Unlike free radical ink where radical species have a much shorter lifetime, the cationic curable ink continues to cure once an acid species has been generated by UV stray light in the nozzle.

Hence, there is still a need for UV curable inkjet inks suitable for a reliable simplified inkjet printing process on glass that does not require high temperatures or adhesive layers based on organic solvents for ensuring good adhesion and that can be cured by free radical polymerization.

### Summary of invention

In order to overcome the problems described above, preferred embodiments of the present invention provide a radiation curable composition as claimed in claim 1.

It was surprisingly found that a radiation curable composition containing a combination of a large amount of monofunctional (meth)acrylates containing an acetal ring and a small amount of a polyvinylacetal provided excellent adhesion on glass.

Further objects of the invention will become apparent from the description hereinafter.

### Description of embodiments

### Definitions

The term "monofunctional monomer" means a monomer having only one free radical polymerizable group, for example an acrylate group.

The term "polyfunctional monomer" means a monomer having two, three or more free radical polymerizable groups, e.g. two acrylate groups and one vinyl ether group.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₁ to C₆-alkenyl group.

Unless otherwise specified a substituted or unsubstituted alkynyl group is preferably a C₁ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester group, amide group, ether group, thioether group, ketone group, aldehyde group, sulfoxide group, sulfone group, sulfonate ester group, sulphonamide group, -Cl, -Br, -I, -OH, -SH, -CN and -NO₂.

### Radiation Curable Compositions

A radiation curable composition according to the present invention contains a) a free radical polymerizable composition containing at least 95 wt% relative to the free radical polymerizable composition of one or more monofunctional (meth)acrylates, wherein at least 80 wt% of the one or more monofunctional (meth)acrylates consist of monofunctional (meth)acrylates including at least one five or six membered acetal ring in their structure; and b) at least one acetal containing polymer having a plurality of repeating units according to Formula (I): 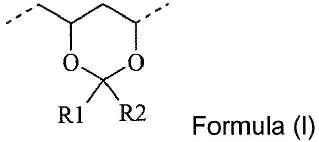 wherein R1 and R2 are independently selected from the group consisting of a hydrogen, an alkyl group, an alkenyl group, an alkynyl group, anaralkyl group, an alkaryl group, an aryl group and a heteoraryl group.

In a preferred embodiment, the radiation curable composition of the invention is a colourless or coloured inkjet ink, more preferably a UV curable colourless or coloured inkjet ink. A colourless inkjet ink is often also referred to as a jettable primer.

A primer generally improves the adhesion of inks to glass. By using a primer on the glass and applying the inks, preferably inkjet inks, onto the primer, the adhesion is improved to a level that standard inks, such as standard UV curable inkjet inks, can be used.

The radiation curable composition contains a free radical polymerizable composition containing at least 95 wt%, preferably 96 to 100 wt% of one or more monofunctional (meth)acrylates based on the total weight of the free radical polymerizable composition.

The radiation curable composition of the invention preferably contains a colour pigment.

In a preferred embodiment, UV light is used for curing the radiation curable composition, which is preferably a radiation curable inkjet composition. For efficient curing, the radiation curable (inkjet) composition then preferably contains a photoinitiating system.

The radiation curable composition may include other components, like one or more polymerization inhibitors and/or one or more surfactants.

The radiation curable composition may be a colourless UV curable inkjet ink, but preferably the UV curable inkjet ink contains a colorant, preferably a pigment. A colourless UV curable inkjet ink can be used as a primer on glass. The advantage of such a colourless UV curable inkjet ink is that it can be applied image-wise. Standard UV curable inkjet inks can then be jetted on the image-wise applied primer. However, by using UV curable inkjet inks containing a radiation curable composition according to the invention, less inkjet print heads are needed

In a preferred embodiment, the UV curable inkjet ink is part of a UV curable inkjet ink set, preferably a UV curable CMYK inkjet ink set.

A UV curable CMYK-inkjet ink set may also be extended with extra inks such as red, green, blue, and/or orange to further enlarge the colour gamut of the image. A UV curable inkjet ink set may also be extended by the combination of full density inkjet inks with light density inkjet inks. The combination of dark and light colour inks and/or black and grey inks improves the image quality by a lowered graininess.

The UV curable inkjet ink set may also include a varnish. A varnish can be used to enhance glossiness or as a protective layer for the colour image. The UV curable inkjet ink set preferably also includes a radiation curable white inkjet ink according to the present invention.

In a preferred embodiment, the surface tension of a colourless UV curable inkjet ink used as primer is at least 2 mN/m larger than the surface tension of one or more UV curable inkjet inks containing a colorant that are jetted on the primer. This allows obtaining a good image quality for the colour inkjet inks on the primer.

The surface tension of the UV curable colourless primer and the inkjet inks is preferably from 20 to 50 mN/m at 25°C, more preferably from 22 to 35 mN/m at 25°C. It is preferably 20 mN/m or more from the viewpoint of printability by a second UV curable inkjet ink, and it is preferably not more than 35 mN/m from the viewpoint of the wettability of the substrate.

For having a good ejecting ability, the viscosity of the UV curable inkjet inks at the jetting temperature is preferably smaller than 100 mPa.s, more preferably smaller than 50 mPa.s at a shear rate of 1,000 s⁻¹ and at 45°C.

A preferred UV curable printing system includes an inkjet printing device and one or more UV curable inkjet compositions according to the invention.

Another object of the invention is to provide an article containing a cured layer of a UV curable inkjet composition according to the invention on a glass surface of a substrate. The article is preferably used for decorative or informative purposes. The article may be a flat article, such as a decorative glass sheet, but it may also have a curvature.

The cured layer of a UV curable inkjet composition in the decorative and informative glass articles may remain unprotected as a top layer, or it can be laminated between two glass sheets or between a glass sheet and a rigid sheet made from a non glass material, such as e.g. a polycarbonate sheet. Especially for outdoor purposes, the inkjet printed image is arranged between two glass sheets so that the inkjet printed image is protected from abrasion, moisture, air, chemicals and pollution.

The two glass sheets may also have a curvature. For example, in the case of windshields for cars, the glass sheets preferably have a curvature prior to the lamination process. Instead of car windshields, curved laminated glass articles can also be used e.g. as building materials for houses and buildings, where they serve a decorative or information purpose.

A flat laminated glass article manufactured according to the invention can, for example, be used as part of a floor, wherein the inkjet printed image does not suffer from wear by people walking on the glass floor. The inkjet printed image may be decorative or may be informative, e.g. for giving directions towards a certain destination in a building.

As the decorative and informative laminated glass articles can now be made in a much more efficient manner resulting in a reduced end price for the customer, they also possess a much higher affordability.

The two glass sheets can each independently be selected from a soda-lime glass sheet or a quartz glass sheet. Quartz glass sheets are more expensive but have the property of being more transparent for UV light than soda-lime glass sheets.

### Acetal Containing Polymers

The radiation curable composition of the present invention contains at least one acetal containing polymer having a plurality of repeating units according to Formula (I): 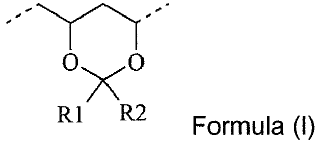 wherein R1 and R2 are independently selected from the group consisting of hydrogen, an alkyl group, an alkenyl group, an alkynyl group, anaralkyl group, an alkaryl group, an aryl group and a heteoraryl group.

In a preferred embodiment, at least one of R1 and R2 represents hydrogen, more preferably both R1 and R2 represent hydrogen.

In a preferred embodiment, R1 and R2 are independently selected from the group consisting of hydrogen and a substituted or unsubstituted alkyl group, an unsubstituted alkyl group being more preferred.

In a more preferred embodiment, R1 represents hydrogen and R2 represents a C1 to C10 alkyl group, with a straight chain C1 to C10 alkyl group being more preferred.

In an even more preferred embodiment, R1 represents hydrogen and R2 represents a C1 to C6 alkyl group, with a straight chain C1 to C6 alkyl group being more preferred.

In a preferred embodiment of the radiation curable composition according to the present invention, the at least one acetal containing polymer having a plurality of repeating units according to Formula (I) is a poly(vinyl acetal) polymer derived from optionally partially hydrolyzed poly(vinyl alcohol). Polymers containing poly(vinyl butyral) moieties are particularly preferred.

The number average molecular weight of the at least one acetal containing polymer is preferably not more than 100,000, more preferably not more than 50,000 and most preferably not more than 25,000. A number average molecular weight no more than 100,000 allows for easy handling of the radiation curable composition, as a value of more than 100,000 tends to result in highly viscous radiation curable compositions. A number average molecular weight of not more than 50,000 makes the composition especially suitable for inkjet printing.

For inkjet printing, e.g. with piezoelectric print heads or valve jet print heads, the at least one acetal containing polymer preferably has a number average molecular weight of less than 50,000 g/mol, more preferably less than 30,000 g/mol and most preferably less than 20,000 g/mol.

Suitable polyvinylacetal polymers are commercially available as Mowital™ and Pioloform™ grades from Kuraray. Pioloform™ BN18, B16H, BL16 and B20H are particularly preferred as polyvinyl butyral, since they all have a number average molecular weight of less than 50,000. Other suitable commercial polyvinylacetal polymers are available as S-Lec™ B and K grades from Sekisui. A preferred polyvinyl butyral is S-Lec™ BL10 having a number average molecular weight of about 15,000.

In a preferred embodiment, the radiation curable composition according to the present invention contains 0.1 to 20.0 wt%, more preferably 0.5 to15 wt% and most preferably 1.0 to 7.0 wt% of the acetal containing polymer, with the wt% based on the total weight of the radiation curable composition. An amount of 1.0 to 7.0 wt% of the acetal containing polymer is especially suitable for making an inkjet composition so that low viscosity can be combined with good adhesion.

### Acetal Monomers

The radiation curable composition of the present invention contains at least one monofunctional (meth)acrylate including at least one five or six membered acetal ring, preferably at least one monofunctional acrylate including at least one five or six membered acetal ring. Hereinafter, the term acetal monomer is used to refer to these monofunctional (meth)acrylates including at least one five or six membered acetal ring.

The radiation curable composition may contain a single type of acetal monomer or it may include a combination of two, three or more different types of acetal monomers.

In a preferred embodiment, the acetal monomer including at least one six membered acetal ring is represented by Formula (II): 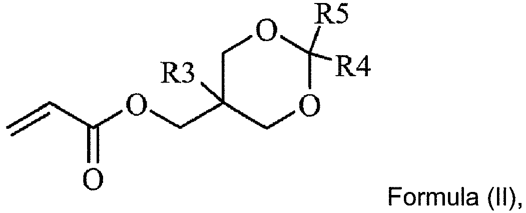 wherein, R3 is selected from the group consisting of a hydrogen and an optionally substituted alkyl group including 1 to 8 carbon atoms; R4 and R5 are selected from the group consisting of a hydrogen, an alkyl group, an alkenyl group, an alkynyl group, an aralkyl group, an alkaryl group and an aryl group; or R4 and R5 may represent the necessary atoms to form a five to seven membered ring.

In a preferred embodiment, the acetal monomer including at least one five membered acetal ring is represented by general Formula (III): 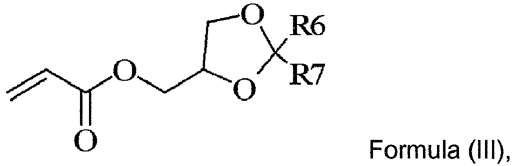 wherein, R6 and R7 are selected from the group consisting of a hydrogen, an alkyl group, an alkenyl group, an alkynyl group, an aralkyl group, an alkaryl group and an aryl group; or R6 and R7 may represent the necessary atoms to form a five to seven membered ring.

Preferred acetal monomers for use in the radiation curable composition according to the present invention are listed in Table 1 without being limited thereto.

**Table 1**

| | |
|---|---|
| A-1 | 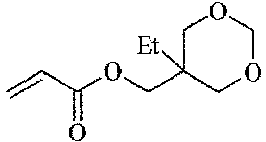 |
| A-2 | 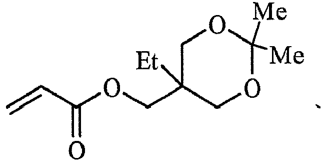 |
| A-3 | 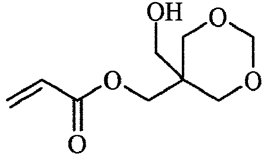 |
| A-4 | 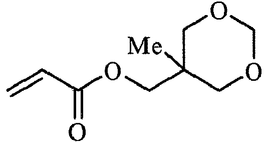 |
| A-5 | 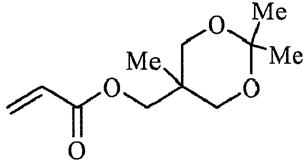 |
| A-6 | 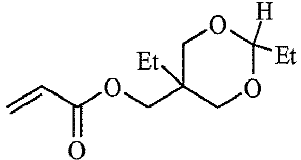 |
| A-7 | 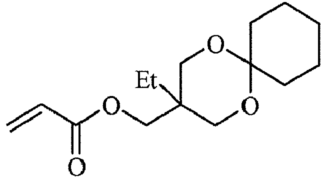 |
| A-8 | 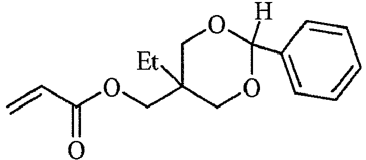 |
| A-9 | 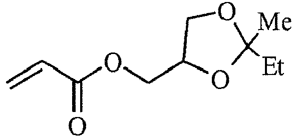 |
| A-10 | 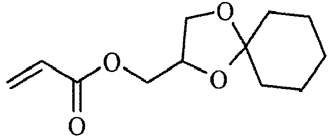 |
| A-11 | 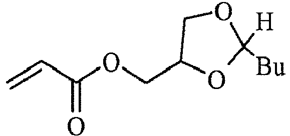 |
| A-12 | 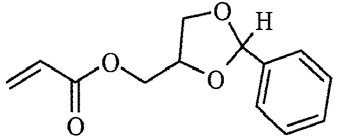 |

The free radical polymerizable composition of the radiation curable composition of the present invention contains at least 80 wt%, more preferably at least 85 wt% and most preferably 87 to 100 wt% of one or more monofunctional (meth)acrylates including at least one five or six membered acetal ring in their structure, wherein the weight percentage (wt%) is based upon the total weight of the free radical polymerizable composition.

### Other Polymerizable Compounds

In addition to the one or more monofunctional (meth)acrylates including at least one five or six membered acetal ring in their structure, the radiation curable composition may contain one, two, three or more other polymerizable compounds.

In a preferred embodiment, these other polymerizable compounds consist of one or more monofunctional monomers.

In order to increase curing speed and scratch resistance, a small amount of a polyfunctional monomer may be included into the free radical polymerizable composition of the radiation curable composition. The free radical polymerizable composition preferably contains 0 to 5 wt% of polyfunctional monomers, preferably 0 to 5 wt% of polyfunctional acrylates, wherein the wt% is based on the total weight of the free radical polymerizable composition.

Any monomer and oligomer capable of free radical polymerization may be used as the other polymerizable compound. The monomers and oligomers may have different degrees of polymerizable functionality, and a mixture including combinations of mono-, di-, tri-and higher polymerizable functionality monomers may be used.

Particularly preferred for use as the other polymerizable compound in the free radical polymerizable composition are monofunctional and/or polyfunctional (meth)acrylate monomers, oligomers or prepolymers, such as isoamyl (meth)acrylate , stearyl (meth)acrylate , lauryl (meth)acrylate , octyl (meth)acrylate, decyl (meth)acrylate, isoamylstyl (meth)acrylate , isostearyl (meth)acrylate , 2-ethylhexyl-diglycol (meth)acrylate , 2-hydroxybutyl (meth)acrylate , 2-acryloyloxyethylhexahydrophthalic acid, butoxyethyl (meth)acrylate , ethoxydiethylene glycol acrylate, methoxydiethylene glycol acrylate, methoxypolyethylene glycol acrylate, methoxypropylene glycol (meth)acrylate , phenoxyethyl (meth)acrylate , tetrahydrofurfuryl (meth)acrylate , isobornyl (meth)acrylate , 2-hydroxyethyl (meth)acrylate , 2-hydroxypropyl (meth)acrylate, 2-hydroxy-3-phenoxypropyl (meth)acrylate , vinyl ether (meth)acrylate , 2-acryloyloxyethylsuccinic acid, 2-acryloyxyethylphthalic acid, 2-acryloxyethyl-2-hydroxyethyl-phthalic acid, lactone modified flexible (meth)acrylate , and t-butylcyclohexyl (meth)acrylate , triethylene glycol di(meth)acrylate , tetraethylene glycol di(meth)acrylate , polyethylene glycol di(meth)acrylate , dipropylene glycol di(meth)acrylate , tripropylene glycol dimethacrylate , polypropylene glycol dimethacrylate , 1,4-butanediol di(meth)acrylate , 1,6-hexanediol di(meth)acrylate , 1,9-nonanediol di(meth)acrylate , neopentyl glycol diacrylate, dimethyloltricyclodecane diacrylate, bisphenol A EO (ethylene oxide) adduct diacrylate, bisphenol A PO (propylene oxide) adduct dimethacrylate, hydroxypivalate neopentyl glycol diacrylate, propoxylated neopentyl glycol dimethacrylate, alkoxylated dimethyloltricyclodecane di(meth)acrylate and polytetramethylene glycol di(meth)acrylate , trimethylolpropane tri(meth)acrylate , EO modified trimethylolpropane tri(meth)acrylate , tri (propylene glycol) trimethacrylate, caprolactone modified trimethylolpropane tri(meth)acrylate , pentaerythritol tri(meth)acrylate , pentaerithritol tetra(meth)acrylate, pentaerythritolethoxy tetra(meth)acrylate, dipentaerythritol hexa(meth)acrylate , ditrimethylolpropane tetra(meth)acrylate , glycerinpropoxy trimethacrylate , and caprolactam modified dipentaerythritol hexa(meth)acrylate , or an N-vinylamide such as, N-vinylcaprolactam or N-vinylformamide ; or acrylamide or a substituted acrylamide, such as acryloylmorpholine.

Other suitable monofunctional acrylates include caprolactone acrylate, cyclic trimethylolpropane formal acrylate, ethoxylated nonyl phenol acrylate, isodecyl acrylate, isooctyl acrylate, octyldecyl acrylate, alkoxylated phenol acrylate, tridecyl acrylate and ethoxylated cyclohexanone dimethanol diacrylate.

Other suitable difunctional acrylates include ethoxylated cyclohexanone dimethanol diacrylate, alkoxylated hexanediol diacrylate, dioxane glycol diacrylate, dioxane glycol diacrylate, cyclohexanone dimethanol diacrylate, diethylene glycol diacrylate and neopentyl glycol diacrylate.

Other suitable trifunctional acrylates include ethoxylated glycerine triacrylate and ethoxylated trimethylolpropane triacrylate.

Other higher functional acrylates include di-trimethylolpropane tetraacrylate, dipentaerythritol pentaacrylate, ethoxylated pentaeryhtitol tetraacrylate, methoxylated glycol acrylates and acrylate esters.

Furthermore, methoxypolyethylene glycol methacrylate, hydroxyethyl methacrylate, phenoxyethyl methacrylate, cyclohexyl methacrylate, tetraethylene glycol dimethacrylate, and polyethylene glycol dimethacrylate are preferred due to their relatively high sensitivity.

Furthermore, the free radical polymerizable composition may also contain polyester acrylates oligomers and straight-chained acrylic oligomers.

Furthermore, the free radical polymerizable composition may also contain N-vinyl heterocyclic compounds are N-vinylcarbazole, N-vinylpyrrolidone, N-vinylindole, N-vinylpyrrole, N-vinylphenothiazine, N-vinylacetoanilide, N-vinylethylacetoamide, N-vinylsuccinimide, N-vinylphthalimide, N-vinylcaprolactam and N-vinylimidazole.

In a preferred embodiment, the free radical polymerizable composition contains a vinylether acrylate. Preferred vinylether acrylates are those disclosed in US 6310115 (AGFA). A particularly preferred compound is 2-(2-vinyloxyethoxy)ethyl acrylate. Other suitable vinylether acrylates are those disclosed in columns 3 to 4 of US 6767980 (NIPPON SHOKUBAI).

In a preferred embodiment, the free radical polymerizable composition includes at least one monomer selected from the group consisting of 2-(2-vinyloxyethoxy) ethyl acrylate, N-vinyl caprolactam, phenoxyethyl acrylate, isobornyl acrylate ethoxylated trimethylolpropane triacrylate and cyclic trimethylolpropane formal acrylate.

### Photoinitiating System

The radiation curable composition can be cured by electron beam, in which case a photoinitiating system is not necessary. If thermal or UV radiation are used for initiating free radical polymerization, then preferably at least one initiator is present. In the preferred embodiment, the radiation curable composition is cured by UV radiation and contains at least one free radical photoinitiator, more preferably it contains a photoinitiating system including a plurality of photoinitiators and/or co-initiators.

A free radical photoinitiator is a chemical compound that initiates polymerization of monomers and oligomers when exposed to actinic radiation by the formation of a free radical.

Two types of free radical photoinitiators can be distinguished and used in the radiation curable composition of the present invention. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

In order to increase the photosensitivity further, the radiation curable composition may additionally contain co-initiators. Preferred examples of co-initiators can be categorized in three groups:
(1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The most preferred co-initiators are aminobenzoates.

Suitable photo-initiators are disclosed in CRIVELLO, J.V., et al. VOLUME III: Photoinitiators for Free Radical Cationic. 2nd edition. Edited by BRADLEY, G.. London,UK: John Wiley and Sons Ltd, 1998. p.287-294.

Specific examples of photo-initiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl) -2,4, 4-trimethylpentylphosphine oxide, 2,4,6trimethylbenzoyldiphenylphosphine oxide, 2-methyl-1- [4- (methylthio) phenyl] -2-morpholinopropan-1-one, 2,2-dimethoxy-1, 2-diphenylethan-1-one or 5,7-diiodo-3- butoxy-6-fluorone.

Suitable commercial photo-initiators include Irgacure™ 184, Irgacure™ 500, Irgacure™ 907, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu^{TM} 470 and H-Nu™ 470X available from SPECTRA GROUP Ltd..

In a preferred embodiment, the photoinitiator is selected from the group consisting of non-polymeric multifunctional photoinitiators, oligomeric or polymeric photoinitiators and polymerizable photoinitiators. Such a diffusion hindered photoinitiator exhibits a much lower mobility in a cured layer of the UV curable inkjet inks than a low molecular weight monofunctional photoinitiator, such as benzophenone. Including diffusion hindered photoinitiators, and also diffusion hindered co-initiators do not only have a safety advantage for the operator of the inkjet printer, but are also environmentally friendly as these compounds cannot be leached out by e.g. acid rain.

Most preferably the diffusion hindered photoinitiator is a polymerizable photoinitiator, preferably having at least one acrylate group. And most preferably the diffusion hindered coinitiator is a polymerizable coinitiator, preferably having at least one acrylate group.

Suitable diffusion hindered photoinitiator may contain one or more photoinitiating functional groups derived from a Norrish type I-photoinitiator selected from the group consisting of benzoinethers, benzil ketals, α,α-dialkoxyacetophenones, α-hydroxyalkylphenones, α-aminoalkylphenones, acylphosphine oxides, acylphosphine sulfides, α-haloketones, α-halosulfones and phenylglyoxalates.

A suitable diffusion hindered photoinitiator may contain one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2053101 A (AGFA GRAPHICS) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2065362 A (AGFA) and EP 2161264 A (AGFA), incorporated herein by reference.

In a preferred embodiment of the UV curable composition, especially for use as a colourless primer, includes no more than 5 wt% of thioxanthone type photoinitiator with the wt% based upon the total weight of the UV curable composition. Higher amounts than 5 wt% of thioxanthone type photoinitiators usually results in a strong photoyellowing.

In a preferred embodiment of the UV curable composition contains at least one acylphosphine oxide type photoinitiator. The latter is advantageous when UV LED curing is used.

A preferred amount of photoinitiator is 0 - 50 wt%, more preferably 0.1 - 20 wt%, and most preferably 0.3 - 15 wt% of the total weight of the curable composition.

Preferred diffusion hindered co-initiators are the polymerizable co-initiators disclosed in EP 2053101 A (AGFA GRAPHICS) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 (AGFA) incorporated herein as a specific reference.

The UV curable composition preferably comprises the diffusion hindered co-initiator in an amount of 0.1 to 50 wt%, more preferably in an amount of 0.5 to 25 wt%, most preferably in an amount of 1 to 10 wt% of the total weight of the ink.

### Polymerization Inhibitors

The radiation curable composition may contain a polymerization inhibitor to improve the storability. Preferred polymerization inhibitors include phenol type antioxidants, hindered amine light stabilizers and phosphor type antioxidants, particular preferred are hydroquinone monomethyl ether, hydroquinone, t-butylcatechol, pyrogallol, benzoquinone, p-methoxyphenol, TEMPO, TEMPOL, and cupferron Al.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the curing sensitivity, it is preferred that the amount capable of preventing polymerization is determined prior to blending. The amount of a polymerization inhibitor is preferably less than 2 wt% based on the total weight of the radiation curable composition.

When the radiation curable composition of the invention is used in ink jet recording, the composition is preferably heated at a temperature in the range of 40 to 80°C to lower the viscosity thereof and then discharged. In such a case, the ink composition preferably contains at least one polymerization inhibitor to prevent head clogging due to thermal polymerization. The amount of the polymerization inhibitor(s) is preferably 200 to 20,000 ppm with respect to the total amount of the radiation curable composition.

### Colorants

The colorants used in the radiation curable composition can be a dye, a pigment or a combination of pigments and dyes, but preferably consist of colour pigments since they usually exhibit a better light fastness than dyes. Organic and/or inorganic pigments may be used. When the radiation curable composition contains a colorant, it is normally also referred to as a radiation curable ink.

The pigments may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH , 2004. ISBN 3527305769.

Suitable pigments are disclosed in paragraphs [0128] to [0138] of WO 2008/074548 (AGFA GRAPHICS).

In a preferred embodiment, the radiation curable composition is a radiation curable yellow (inkjet) ink including a pigment selected from the group consisting of C.I Pigment Yellow 150, C.I Pigment Yellow 151, C.I Pigment Yellow 155 and C.I Pigment Yellow 180.

A preferred pigment for the cyan (inkjet) ink is C.I. Pigment Blue 15:4.

A preferred pigment for the magenta (inkjet) ink is preferably selected frtom the group consisting of diketopyrrolo-pyrrole pigments, quinacridone pigments and mixed crystals thereof.

Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions.

Preferred mixed crystals contain at least 70 % of unsubstituted quinacridone. A commercially available example is Cinquasia™ Magenta RT-355-D from Ciba Specialty Chemicals.

Also mixtures of pigments may be used in the radiation curable (inkjet) inks. A preferred radiation curable black (inkjet) ink includes a mixture of a black pigment with a cyan pigment and/or magenta pigment. By including a cyan pigment and/or magenta pigment in the black ink, a neutral black colour is obtained rather than a brownish black colour.

Non-organic pigments may be used in the pigment dispersions. Particular preferred pigments are C.I. Pigment Metal 1, 2 and 3. Illustrative examples of the inorganic pigments include red iron oxide (III), cadmium red, ultramarine blue, prussian blue, chromium oxide green, cobalt green, amber, titanium black and synthetic iron black.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. An average particle size smaller than 0.050 µm is less desirable for decreased lightfastness.

However for white pigment inkjet inks, the numeric average particle diameter of the white pigment is preferably from 150 to 500 nm, more preferably from 200 to 400 nm, and most preferably from 250 to 300 nm. Sufficient hiding power cannot be obtained when the average diameter is less than 150 nm, and the storage ability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

Suitable white pigments are given by Table 2 in [0116] of WO 2008/074548 (AGFA). The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548 (AGFA).

The pigments are present in the range of 0.01 to 15 %, more preferably in the range of 0.05 to 10 % by weight and most preferably in the range of 0.1 to 5 % by weight, each based on the total weight of the inkjet ink. For white pigmented ink, the white pigment is preferably present in an amount of 3% to 30% by weight of the inkjet ink, and more preferably 5% to 25%. An amount of less than 3% by weight cannot achieve sufficient covering power and usually exhibits very poor storage stability and ejection property.

### Polymeric Dispersants

If the colorant in the radiation curable (inkjet) ink is a pigment, then the radiation curable (inkjet) ink preferably contains a dispersant, more preferably a polymeric dispersant, for dispersing the pigment.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA).

Commercial examples of polymeric dispersants are the following:
- DISPERBYK™ dispersants available from BYK CHEMIE GMBH;
- SOLSPERSE™ dispersants available from NOVEON;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from CIBA SPECIALTY CHEMICALS INC;
- DISPONER™ dispersants from DEUCHEM; and
- JONCRYL™ dispersants from JOHNSON POLYMER.

### Dispersion Synergists

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The synergist is preferably added in a smaller amount than the polymeric dispersant(s). The ratio of polymeric dispersant/dispersion synergist depends upon the pigment and should be determined experimentally. Typically the ratio wt% polymeric dispersant/wt% dispersion synergist is selected between 2:1 to 100:1, preferably between 2:1 and 20:1.

Suitable dispersion synergists that are commercially available include Solsperse™ 5000 and Solsperse™ 22000 from NOVEON.

Particular preferred pigments for the magenta ink used are a diketopyrrolo-pyrrole pigment or a quinacridone pigment. Suitable dispersion synergists include those disclosed in EP 1790698 A (AGFA), EP 1790696 A (AGFA) , WO 2007/060255 (AGFA) and EP 1790695 A (AGFA).

In dispersing C.I. Pigment Blue 15:3, the use of a sulfonated Cu-phthalocyanine dispersion synergist, e.g. Solsperse™ 5000 from NOVEON is preferred. Suitable dispersion synergists for yellow inkjet inks include those disclosed in EP 1790697 A (AGFA).

### Surfactants

The radiation curable composition may contain one or more surfactants. Especially in the case of radiation curable compositions that are jetted, such as a radiation curable jettable primer or inkset ink, a surfactant is preferably present. A radiation curable inkjet ink must meet stringent performance criteria in order to be adequately jettable with high precision and reliability during an extended period of time. In order to achieve this, the surface tension of the ink is reduced by the addition of one or more surfactants. In the case of radiation curable inkjet inks, however, the surface tension of the inkjet ink is not only determined by the amount and type of surfactant, but also by the polymerizable compounds, the polymeric dispersants and other additives in the ink composition.

The surfactant can be anionic, cationic, non-ionic, or zwitter-ionic and is usually added in a total quantity less than 1wt% based on the total weight of the radiation curable inkjet ink or jettable primer.

Suitable surfactants include fluorinated surfactants, fatty acid salts, ester salts of a higher alcohol, alkylbenzene sulfonate salts, sulfosuccinate ester salts and phosphate ester salts of a higher alcohol (for example, sodium dodecylbenzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Preferred surfactants are selected from fluoro surfactants (such as fluorinated hydrocarbons) and silicone surfactants. The silicone surfactants are preferably siloxanes and can be alkoxylated, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

### Preparation of Inkjet Inks

The preparation of pigmented radiation curable inkjet inks is well-known to the skilled person. Suitable methods of preparation are disclosed in paragraphs [0076] to [0085] of WO 2011/069943 (AGFA).

A preferred method of manufacturing a radiation curable composition according to the invention includes at least the steps of: a) making a free radical polymerizable composition containing one or more monofunctional (meth)acrylates including at least one five or six membered acetal ring in their structure; and
b) dissolving in the free radical polymerizable composition at least one acetal containing polymer having a plurality of repeating units according to Formula (I): 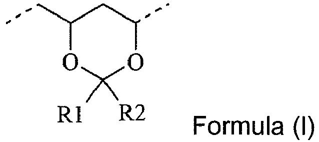 wherein R1 and R2 are independently selected from the group consisting of a hydrogen, an alkyl group, an alkenyl group, an alkynyl group, an aralkyl group, an alkaryl group, an aryl group and a heteoraryl group.

### UV Curable inkjet Printing Methods

A UV curable inkjet printing method according to the invention comprises the steps of: a) jetting one or more UV curable inkjet compositions according to the invention on a substrate; and b) at least partially UV curing the one or more UV curable inkjet compositions jetted on the substrate. The substrate preferably has a glass surface, more preferably is a glass substrate.

The UV curable inkjet printing method is especially suitable for jetting on a substrate which has a glass surface, wherein excellent adhesion of the one or more UV curable inkjet compositions to the glass surface is obtained. However, it was also found that good adhesion could be obtained on polymeric surfaces, such as polyethylene terephthalate (PET) and other types of polyesters, and especially on metallic surfaces, such as aluminium surfaces, copper surfaces and iron based surfaces like plain steel, stainless steel and galvanized steel.

In a preferred embodiment, the UV curable inkjet printing method of the invention is incorporated in a production line for making decorative glass articles. The UV curable inkjet printing method is preferably part of a method for making decorative glass articles, wherein a decorative layer is printed on a glass substrate, preferably a glass sheet.

For outdoor purposes, the decorative layer on the glass sheet is preferably positioned between the glass sheet and a second rigid sheet such as glass or polycarbonate. The second rigid sheet is preferably also a glass sheet. The second rigid sheet can be laminated on the decorative layer on the glass sheet using an interlayer.

The interlayer can be a solid thermoplastic polymeric sheet, such as a polyvinylbutyral sheet, or a curable liquid adhesive resin composition. These techniques for laminating two glass sheets are well-known in the art and exemplified in US 2008206504 (HAYES ET AL), WO 2005/085371 (DUPONT), WO 2006/050536 (DUPONT) and WO 2014/048589 (VITRAPRINT).

Preferred thermoplastic polymeric sheets are selected from the group consisting of poly(vinyl acetal) sheets and poly(ethylene-co-vinyl acetate) sheets. Particularly preferred for the purposes of the present invention are poly(vinyl butyral) sheets. Commercially available poly(vinyl butyral) sheets are, for example, available from DuPont under the tradename of Butacite™.

The curable liquid adhesive resin composition is preferably liquid at 25°C and has a viscosity at 25°C of preferably 1 to 1,000 mPa.s, more preferably of less than 500 mPa.s, and most preferably no more than 250 mPa.s.

The curable liquid adhesive resin composition is preferably selected from a one or multiple component acrylate-type, polyester-type, epoxy-type, polyurethane-type, adhesive resin and/or combinations thereof.

In a particularly preferred embodiment, the curable liquid adhesive resin composition is a UV curable urethane acrylate liquid adhesive resin, preferably having a viscosity of no more than 250 mPa.s, more preferably no more than 5 to 200 mPa.s.

A method for making decorative glass articles includes the UV curable inkjet printing method according to the invention for producing a decorative layer on a glass substrate, preferably a glass sheet.

In a preferred embodiment, the method for making decorative glass articles includes the steps of: a) UV inkjet printing an image with one or more UV curable inkjet compositions according to the invention on a first glass sheet; b) applying a double sided tape on all four edges of the first glass sheet on the side carrying the image; c) applying a second glass sheet onto the double sided tape well aligned with the first glass sheet; d) applying a curable liquid adhesive resin composition between the first and second glass sheets; and e) curing the curable liquid adhesive resin composition until a solid adhesive layer is obtained. Preferably the one or more UV curable inkjet compositions are UV curable inkjet inks, so that no primer has to be jetted as this increases the cost of the inkjet printing device by addition of extra print heads.

In another embodiment of the above described method for making decorative glass articles, the one or more UV curable inkjet compositions according to the invention consist of a jettable primer, so that standard UV curable inkjet inks can be used.

The double sided tape preferably has a thickness of 0.4 to 3 mm. The thickness of the tape defines the space between the glass sheets. Sealing of the non-closed areas between the tapes can be done by means of a cross-over of the tape, by non-acidic silicone or with a hot melt glue or adhesive.

The curable liquid adhesive resin composition is pumped or poured between the two glass sheets in an area which has not yet been sealed. After the curable liquid adhesive resin composition has been applied between the first and second glass sheets, if necessary, air is evacuated. This can be achieved by laying the assembly of the first and second glass sheets horizontal and allowing the curable liquid adhesive resin composition to spread and fill the internal space between the first and second glass sheets. Final trapped air and bubbles are removable, for example, by using a syringe.

The liner/backing of the double sided tape is preferably not fully removed at the same time for the four edges. Preferably, from a part of the tape the liner/backing is removed and is firmly pressed down so as to seal the contact between the glass sheets and the tape. The curable liquid adhesive resin composition is pumped or poured between the glass sheets via an open side between the glass sheets which has not been sealed yet. After the curable liquid adhesive resin composition has been applied in the internal space between the two glass sheets, the air is evacuated by laying the formed multi-layered decorative panel horizontal and allowing the curable liquid adhesive resin composition to spread and fill the internal space. At the same time, the remaining liner/backing of the tape is removed and the internal space is sealed. Final trapped air and bubbles are removable using e.g. a syringe.

### Inkjet Printing Devices

The radiation curable inkjet composition, preferably a UV curable inkjet composition, which can be primer or ink, may be jetted by one or more print heads ejecting small droplets in a controlled manner through nozzles onto a substrate, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with the radiation curable inkjet composition. When the voltage is again removed, the ceramic expands to its original shape, ejecting a drop of radiation curable inkjet composition from the print head. However the inkjet printing method according to the present invention is not restricted to piezoelectric inkjet printing. Other inkjet print heads can be used and include various types, such as a continuous type.

Preferred piezoelectric print heads are so-called though flow piezoelectric print heads available from sources such as XAAR, RICOH and Toshiba TEC. In these through flow print heads, the radiation curable inkjet composition is recirculated in the inkjet printing device via an inlet and outlet of the print head, whereby sedimentation of dense pigment particles is largely prevented.

The inkjet print head normally scans back and forth in a transversal direction across the moving ink-receiver surface. Often the inkjet print head does not print on the way back. Bi-directional printing is preferred for obtaining a high areal throughput. Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the substrate surface is transported under the inkjet print heads.

### UV Curing Devices

The radiation curable inkjet composition is preferably cured by exposure to ultraviolet radiation. The UV curing means may be arranged in combination with the print head of the inkjet printer, travelling therewith so that the UV curable inkjet composition is exposed to curing radiation very shortly after been jetted.

In such an arrangement it can be difficult to provide a small enough radiation source connected to and travelling with the print head, such as LED. Therefore, a static fixed radiation source may be employed, e.g. a source of curing UV-light, connected to the radiation source by means of flexible radiation conductive means such as a fibre optic bundle or an internally reflective flexible tube. Alternatively, the actinic radiation may be supplied from a fixed source to the radiation head by an arrangement of mirrors including a mirror upon the radiation head. However preferably UV LEDs are connected to and travelling with the print head.

The source of radiation may also be an elongated radiation source extending transversely across the substrate to be cured. It may be adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

In a preferred embodiment, the UV curable inkjet composition is cured by UV LEDs only. The inkjet printing device preferably contains one or more UV LEDs preferably with a wavelength larger than 360 nm, preferably one or more UV LEDs with a wavelength larger than 380 nm, and most preferably UV LEDs with a wavelength of about 395 nm.

Furthermore, it is possible to cure a jetted pattern using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Pioloform™ BL16** is a poly(vinyl acetal-co- vinyl butyral), supplied by Wacker.

**Ink Jet Yellow™ 4GC** is a yellow colour pigment from CLARIANT.

**Macrolex™ Blue 3R** is blue dye from BAYER.

**Solsperse™ 35000** is a polymeric dispersant from LUBRIZOL.

**SR 531** is a monofunctional acrylate having the following structure, supplied by Sartomer.

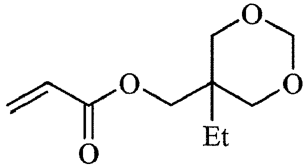

**SR339C** is phenoxyethyl acrylate supplied by Sartomer.

**SR285** is tetrahydrofurfuryl acrylate supplied by Sartomer.

**SR256** is 2-(2-ethoxyethoxy)ethyl acrylate supplied by Sartomer.

**Photomer™ 4012** is isobornyl acrylate supplied by IGM Resins.

**SR508** is dipropylene glycol diacrylate supplied by Sartomer

**CHDOL 10** is an acetal containing monofunctional acrylate, supplied by Kowa Europe GMBH and having the following structure.

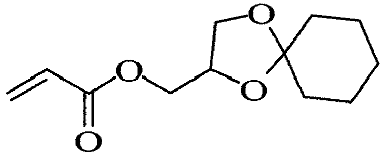

**IC819** is a bis(2,4,6-trimethylbenzoyl)-phenylphosphineoxide photoinitiator available as Irgacure™ 819 from BASF.

**TPO-L** is 2,4,6-trimethylbenzoyl phenylphosphinic acid ethyl ester available as Lucirin TPO-L from BASF.

**ITX** is a mixture of 2-isopropyl-thioxanthone and 4-isopropyl-thioxanthone available as Quantacure ITX from RAHN AG.

**EPD** is ethyl 4-dimethylaminobenzoate, available under the trade name of Genocure™ EPD from RAHN AG.

**INHIB** is a mixture forming a polymerization inhibitor having a composition according to Table 2.

**Table 2**

| **Component** | **wt%** |
|---|---|
| VEEA | 82.4 |
| p-methoxyphenol | 4.0 |
| BHT | 10.0 |
| Cupferron™ AL | 3.6 |

**Cupferron™ AL** is aluminum N-nitrosophenylhydroxylamine from WAKO CHEMICALS LTD.

**BHT** is an abbreviation for 2,6-di-tert.butyl-4-methylphenol (CASRN128-37-0) from ALDRICH CHEMICAL CO.

**VEEA** is 2-(2-vinyloxyethoxy)ethyl acrylate, a difunctional monomer available from Nippon Shokubai, Japan.

**UV3510** is a polyether modified silicon surfactant available as BYK-UV3510 from BYK Chemie.

### Measurement Methods

### 1. Average Particle Size

The average particle size of pigments in a pigment dispersion was determined with photon correlation spectroscopy at a wavelength of 633 nm with a 4 mW HeNe laser on a diluted sample of the pigment dispersion. The particle size analyzer used was a Malvern™ nano-S from Goffin-Meyvis.

The sample was prepared by addition of one drop of pigment dispersion to a cuvette containing 1.5 mL ethyl acetate and mixed until a homogenous sample was obtained .The measured particle size is the average value of 3 consecutive measurements of 6 runs of 20 seconds.

### 2. Adhesion on Glass

The adhesion of a cured sample was evaluated by a cross-cut test according to ISO2409:1992(E). Paints (International standard 1992-08-15) using a Braive No.1536 Cross Cut Tester from BRAIVE INSTRUMENTS with spacing of a 1 mm between cuts and using a weight of 600 g, in combination with a Tesatape™ 4104 PVC tape. The evaluation was made in accordance with a criterion described by Table 3.

**Table 3**

| **Evaluation value** | **Observation** |
|---|---|
| **0** | Nothing removed, perfect adhesion. |
| **1** | Detachment of only very small parts of the cured layer, almost perfect adhesion. |
| **2** | Minor parts of the cured layerwas removed by the tape, good adhesion |
| **3** | Parts of the cured layer were removed by the tape, poor adhesion. |
| **4** | Most of the cured layer was removed by the tape, poor adhesion. |
| **5** | The cured layer was completely removed from the substrate by the tape, no adhesion. |

### 3. Viscosity

The viscosity of the UV curable compositions was measured at 45°C and at a shear rate of 1,000 s⁻¹ using a RotoviscoTM RV1 viscometer from HAAKE.

### 4. Surface Tension

The static surface tension of the UV curable inks was measured with a KRÜSS tensiometer K9 from KRÜSS GmbH, Germany at 25°C after 60 seconds.

### Example 1

In this example, the impact of the acetal containing polymer is illustrated.

### Preparation of the Radiation Curable Compositions

The comparative radiation curable composition COMP-1 and the inventive radiation curable compositions INV-1 to INV-3 were prepared by mixing the components according to Table 4. All weight percentages (wt%) are based on the total weight of the radiation curable compositions.

**Table 4**

| **wt% of component:** | **COMP-1** | **INV-1** | **INV-2** | **INV-3** |
|---|---|---|---|---|
| **Pioloform™ BL 16** | - | 1 | 5 | 10 |
| **SR 531** | 87 | 86 | 82 | 77 |
| **IC819** | 2 | 2 | 2 | 2 |
| **TPO-L** | 2 | 2 | 2 | 2 |
| **ITX** | 4 | 4 | 4 | 4 |
| **EPD** | 4 | 4 | 4 | 4 |
| **UV3510** | 1 | 1 | 1 | 1 |

The comparative radiation curable composition COMP-1 and the inventive radiation curable compositions INV-1 to INV-3 were coated with a barcoater using a 20 µm bar on a precleaned glass plate having a thickness of 1.9 mm. The glass plate was precleaned using isopropanol. Each sample was cured using a 395 nm 12 W LED by passing it four times under the LED at a belt speed of 30 m/min.

### Evaluation and Results

The curing was evaluated by scratching the surface with a Q-tip as evaluation method. None of the samples could be damaged and were considered as fully cured.

The adhesion of the cured samples was evaluated. The results are shown in Table 5.

**Table 5**

| **Radiation curable composition** | **Adhesion** |
|---|---|
| **COMP-1** | 5 |
| **INV-1** | 3 |
| **INV-2** | 1 |
| **INV-3** | 1 |

From Table 5, it becomes apparent that even low concentrations of an acetal containing polymer in the radiation curable composition already improve the adhesion on glass.

### Example 2

This example illustrates that only high concentrations of acetal monomers in combination with an acetal containing polymer lead to excellent adhesion on glass.

### Preparation of the Radiation Curable Compositions

The composition of the comparative radiation curable compositions COMP-2 to COMP-7 and the inventive radiation curable compositions INV-4 to INV-6 were prepared by mixing the components according to Table 6. respectively Table 7. All weight percentages are based on the total weight of the radiation curable compositions.

**Table 6**

| **wt% of component:** | **COMP-2** | **COMP-3** | **COMP-4** | **COMP-5** | **COMP-6** | **COMP-7** |
|---|---|---|---|---|---|---|
| Pioloform™ BL 16 | 5 | 5 | 5 | 5 | 5 | - |
| SR 531 | - | - | - | - | 62 | - |
| CHDOL 10 | - | - | - | - | - | 87 |
| SR339C | 82 | - | - | - | 20 | - |
| SR285 | - | 82 | - | - | - | - |
| SR256 | - | - | 82 | - | - | - |
| Photomer™ 4012 | - | - | - | 82 | - | - |
| IC819 | 2 | 2 | 2 | 2 | 2 | 2 |
| TPO-L | 2 | 2 | 2 | 2 | 2 | 2 |
| ITX | 4 | 4 | 4 | 4 | 4 | 4 |
| EPD | 4 | 4 | 4 | 4 | 4 | 4 |
| UV3510 | 1 | 1 | 1 | 1 | 1 | 1 |

**Table 7**

| **wt% of component** | **INV-4** | **INV-5** | **INV-6** |
|---|---|---|---|
| **Pioloform™ BL 16** | 5 | 5 | 5 |
| **SR 531** | 82 | - | 72 |
| **CHDOL 10** | - | 82 | - |
| **SR339C** | - | - | 10 |
| **IC819** | 2 | 2 | 2 |
| **TPO-L** | 2 | 2 | 2 |
| **ITX** | 4 | 4 | 4 |
| **EPD** | 4 | 4 | 4 |
| **UV3510** | 1 | 1 | 1 |

The comparative radiation curable compositions COMP-2 to COMP-7 and the inventive radiation curable compositions INV-4 to INV-6 were coated with a barcoater using a 20 µm bar on a precleaned glass plate having a thickness of 1.9 mm. The glass plate was precleaned using isopropanol. Each sample was cured using a 395 nm 12 W LED by passing it four times under the LED at a belt speed of 30 m/min.

### Evaluation and Results

The curing was evaluated by scratching the surface with a Q-tip as evaluation method. None of the samples could be damaged and were considered as fully cured.

The adhesion of the cured samples was evaluated. The results are shown in Table 8.

**Table 8**

| **Radiation curable composition** | **Adhesion** |
|---|---|
| **COMP-2** | 5 |
| **COMP-3** | 5 |
| **COMP-4** | 5 |
| **COMP-5** | 5 |
| **COMP-6** | 5 |
| **COMP-7** | 5 |
| **INV-4** | 1 |
| **INV-5** | 1 |
| **INV-6** | 1 |

From Table 8, it becomes apparent that only the compositions containing a high concentration of acetal monomers and an acetal containing polymer show good adhesion to glass, whereas the absence of the polymer or the presence of higher concentrations of another monomer lead to complete adhesive failure.

### Example 3

This example illustrates that the presence of a higher functional monomers can very fast lead to adhesive failure.

### Preparation of the Radiation Curable Compositions

The comparative radiation curable composition COMP-8 and the inventive radiation curable compositions INV-7 were prepared by mixing the components according to Table 9. All weight percentages (wt%) are based on the total weight of the radiation curable compositions.

**Table 9**

| **Components** | **INV-7** | **COMP-8** |
|---|---|---|
| Pioloform™ BL 16 | 5 | 5 |
| SR531 | 82 | 75 |
| SR508 | - | 7 |
| IC819 | 2 | 2 |
| TPO-L | 2 | 2 |
| ITX | 4 | 4 |
| EPD | 4 | 4 |
| UV3510 | 1 | 1 |

The comparative radiation curable composition COMP-8 and the inventive radiation curable composition INV-7 were coated with a barcoater using a 20 µm bar on a precleaned glass plate having a thickness of 1.9 mm. The glass plate was precleaned using isopropanol. Each sample was cured using a 395 nm 12 W LED. Each sample was passed four times under the LED at a belt speed of 30 m/min.

### Evaluation and Results

The curing was evaluated by scratching the surface with a Q-tip as evaluation method. None of the samples could be damaged and were considered as fully cured.

The adhesion of the cured samples was evaluated. The results are shown in Table 10

**Table 10**

| **Radiation curable composition** | **Adhesion** |
|---|---|
| **COMP-8** | 5 |
| **INV-7** | 1 |

From Table 10, it becomes apparent that only low concentrations of difunctional monomers can be tolerated.

### Example 4

The example illustrates the use of radiation curable compositions according to the present invention as inkjet inks containing colorants.

### Preparation of Pigment Dispersion DISP-1

A predispersion of Ink Jet Yellow™ 4GC in phenoxyethyl acrylate (SR339C) was made by mixing 355 g phenoxyethyl acrylate, 500 g of a 30 wt% solution of Solsperse™ 35000 in phenoxy ethyl acrylate, 10 g INHIB and 300 g Ink Jet Yellow 4GC using a Disperlux dispenser (from Disperlux™ S.A.R.L., Luxembourg). Stirring was continued for 30 minutes. The vessel was coupled to Dynomill ECM Mulitilab from the company Willy A. Bachofen (Switserland), preloaded with 335 g phenoxyethyl acrylate and filled for 42% with 0.4 mm yttrium stabilized zirconium beads ("high wear resistant zirconia grinding media" from TOSOH Co.). The mixture was circulated over the mill at a flow rate of 200 ml/min and a rotation speed of 10 m/s for a residence time of 22.5 min. During milling an additional amount of 500 g of a 30 wt% solution of Solsperse™ 35000 in phenoxyethyl acrylate was added and milling was continued until a total milling time of 1 hour 44 minutes. DISP-1 was discharched in a 3 litre vessel. The resulting concentrated pigment dispersion DISP-1, according to Table 11, exhibited an average particle size of 140 nm and a viscosity of 168 mPa.s measured at 25°C using a Haake™ Rotovisco at a shear rate of 10 s⁻¹.

**Table 11**

| **Component** | **wt%** |
|---|---|
| **Ink Jet Yellow™ 4GC** | 15.0 |
| **Solsperse™ 35000** | 15.0 |
| **INHIB** | 1.0 |
| **VEEA** | 69.0 |

### Preparation of the Radiation Curable Compositions

The inventive radiation curable compositions INV-8 to INV-10 were prepared by mixing the components according to Table 12. All weight percentages (wt%) are based on the total weight of the radiation curable compositions.

**Table 12**

| **wt% of component:** | **INV-8** | **INV-9** | **INV-10** |
|---|---|---|---|
| **SR531** | 77 | 81 | 80 |
| **Pioloform™ BL 16** | 5 | 5 | 5 |
| **IC819** | 2 | 2 | 2 |
| **TPO-L** | 2 | 2 | 2 |
| **ITX** | 4 | 4 | 4 |
| **EPD** | 4 | 4 | 4 |
| **UV3510** | 1 | 1 | 1 |
| **Disp-1** | 5 | - | - |
| **Macrolex Blue 3R** | - | 1 | 2 |

The inventive radiation curable compositions INV-8 to INV-10 were coated on a precleaned glass plate (floated glass, coated on the side which was in contact with the molten tin during glass production), having a thickness of 1.9 mm, using a 10 µm bar. The glass plate was precleaned using isopropanol. Each sample was cured using a 395 nm 12 W LED. Each sample was passed six times under the LED at a belt speed of 30 m/min. The curing was evaluated using scratching the surface with a Q-tip as evaluation method. None of the samples could be damaged and were considered as fully cured.

### Evaluation and Results

The adhesion of each cured sample was evaluated by the cross-cut test according to ISO2409:1992(E). The results are shown in Table 13.

**Table 13**

| **Radiation curable composition** | **Adhesion** |
|---|---|
| **INV-8** | 0 |
| **INV-9** | 0 |
| **INV-10** | 0 |

From Table 13, it becomes apparent that both pigments and dyes can be used in radiation curable compositions according to the present invention, without loss of adhesion performance.

## Claims

1. A radiation curable composition containing
a) a free radical polymerizable composition containing at least 95 wt% relative to the free radical polymerizable composition of one or more monofunctional (meth)acrylates, wherein at least 80 wt% of the one or more monofunctional (meth)acrylates consist of monofunctional (meth)acrylates including at least one five or six membered acetal ring in their structure; and
b) at least one acetal containing polymer having a plurality of repeating units according to Formula (I): 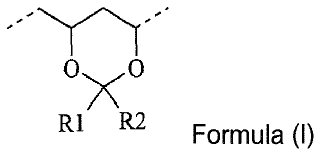 wherein R1 and R2 are independently selected from the group consisting of a hydrogen, an alkyl group, an alkenyl group, an alkynyl group, an aralkyl group, an alkaryl group, an aryl group and a heteoraryl group.

2. The radiation curable composition according to claim 1, wherein the one or more monofunctional (meth)acrylates including at least one five or six membered acetal ring in their structure is represented by Formula (II) or (III): 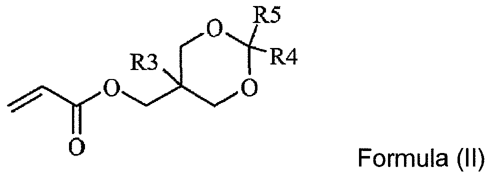 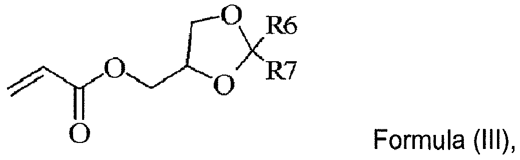 wherein,
R3 is selected from the group consisting of a hydrogen and an optionally substituted alkyl group including 1 to 8 carbon atoms;
R4 and R5 are selected from the group consisting of a hydrogen, an alkyl group, an alkenyl group, an alkynyl group, an aralkyl group, an alkaryl group and an aryl group; or R4 and R5 may represent the necessary atoms to form a five to seven membered ring;
R6 and R7 are selected from the group consisting of a hydrogen, an alkyl group, an alkenyl group, an alkynyl group, an aralkyl group, an alkaryl group and an aryl group; or R6 and R7 may represent the necessary atoms to form a five to seven membered ring.

3. The radiation curable composition according to claim 1 or 2, wherein the at least one acetal containing polymer having a plurality of repeating units according to Formula (I) is a polymer containing poly(vinyl butyral) moieties

4. The radiation curable composition according to any one of claims 1 to 3, wherein the at least one acetal containing polymer having a plurality of repeating units according to Formula (I) is present in the composition in an amount of 1.0 to 7.0 wt% with the wt% based on the total weight of the radiation curable composition.

5. The radiation curable composition according to any one of claims 1 to 4, wherein the radiation curable composition contains a colour pigment.

6. The radiation curable composition according to any one of claims 1 to 5, further containing a photoinitiating system.

7. The radiation curable composition according to claim 6, wherein the photoinitiating system contains at least one acylphosphine oxide type photoinitiator.

8. A UV curable inkjet composition containing a radiation curable composition according to any one of claims 1 to 7.

9. A UV curable printing system including a UV curable inkjet composition according to claim 8 and an inkjet printing device

10. An article containing a cured layer of a UV curable inkjet composition according to claim 8 on a glass surface of a substrate.

11. A UV curable inkjet printing method comprising the steps of:
a) jetting one or more UV curable inkjet compositions according to claim 8 on a substrate; and
b) at least partially UV curing the one or more UV curable inkjet compositions jetted on the substrate.

12. The UV curable inkjet printing method according to claim 11, wherein the substrate has a glass surface.

13. A method for making decorative glass articles including the UV curable inkjet printing method according to claim 12 for producing a decorative layer on a glass substrate.

14. The method according to claim 13 including the steps of:
a) UV inkjet printing one or more UV curable inkjet compositions according to claim 8 on a first glass sheet;
b) applying a double sided tape on all four edges of the first glass sheet on the side carrying the image;
c) applying a second glass sheet onto the double sided tape well aligned with the first glass sheet;
d) applying a curable liquid adhesive resin composition between the first and second glass sheets; and
e) curing the curable liquid adhesive resin composition until a solid adhesive layer is obtained.

15. The method according to claim 13 or 14, wherein the one or more UV curable inkjet compositions do not include a primer.
